(19) Europäisches Patentamt

European Patent Office

Office européen des brevets

(11) EP 1 195 694 A2

(12) EUROPEAN PATENT APPLICATION

(43) Date of publication:
10.04.2002 Bulletin 2002/15

(51) Int Cl.7: G06F 17/30

(21) Application number: 01118497.5

(22) Date of filing: 01.08.2001

(84) Designated Contracting States:
AT BE CH CY DE DK ES FI FR GB GR IE IT LI LU MC NL PT SE TR
Designated Extension States:
AL LT LV MK RO SI

(30) Priority: 06.10.2000 EP 00121837

(71) Applicant: International Business Machines Corporation
Armonk, NY 10504 (US)

(72) Inventor: Keller, Martin
71665 Vaihingen/Enz (DE)

(74) Representative: Duscher, Reinhard, Dr.
IBM Deutschland GmbH,
Intellectual Property,
Pascalstrasse 100
70548 Stuttgart (DE)

(54) **Automatic determination of OLAP Cube dimensions**

(57) This invention relates in general to database management systems performed by computers, and in particular, to database management systems that support on-line analytical processing (OLAP).

The present invention teaches a means and a computerized method for automatically determining one or more variable dimensions for a multi-dimensional database table, whereby the multi-dimensional database table also comprises at least one pre-defined measure dimension for storing values of one or more measure types.

The current invention suggests to treat for the purpose of determination of the variable dimensions a multitude of input records as an implicit, yet unknown functional relationship between the measure types (as a dependent variables) and the variable types (as independent variables). Based on this insight it is then suggested to calculate a regression function as a prediction model for the (dependent) measure types based on the (independent) variable types utilizing the multitude of input records. The most significant variable types contributing to this prediction model are then selected as variable dimensions for the multidimensional database table, i. e. as the OLAP cube dimensions.

501 SELECT MEASURE-TYPE MEASURE $_i$ OF MULTIDIMENSIONAL DATABASE-TABLE — 504

502 BASED ON INPUT RECORDS WITH VALUES FOR CANDIDATE VARIABLE-TYPES $X_k$ AND MEASURE-TYPES
- CALCULATE REGRESSION-FUNCTION AS PREDICTION-MODEL OF SELECTED MEASURE-TYPE
- BASED ON UP TO $M_i$ MOST SIGNIFICANT VARIABLE-TYPES

503 FURTHER MEASURE-TYPES MEASURE $_i$ ? — YES / NO

505 FOR EACH POTENTIAL VARIABLE-TYPE $X_k$ DETERMINE AN EFFECTIVE SIGNIFICANCE $S_k^{eff}$ USING A BALANCING FUNCTION B DEPENDING ON INDIVIDUAL SIGNIFICANCE-VALUES

$$S_k^{eff} = B (S_k(Measure_1) \, S_k (Measure_2), \ldots )$$

506 WITH RESPECT TO EFFECTIVE SIGNIFICANCE $S_k^{eff}$ SELECT THE M_eff MOST SIGNIFICANT VARIABLE-TYPES AS VARIABLE-DIMENSIONS FOR MUTLIDIMENSIONAL DATABASE-TABLE

FIG. 5

**Description**

**1. Background of the Invention**

**1.1 Field of the Invention**

This invention relates in general to database management systems performed by computers, and in particular, to database management systems that support on-line analytical processing (OLAP).

**1.2 Description and Disadvantages of Prior Art**

Relational DataBase Management System (RDBMS) software using a Structured Query Language (SQL) interface is well known in the art. The SQL interface has evolved into a standard language for RDBMS software and has been adopted as such by both the American National Standards Institute (ANSI) and the International Standards Organization (ISO).

RDBMS software has typically been used with databases comprised of traditional data types that are easily structured into tables. However, RDBMS products do have limitations with respect to providing users with specific views of data. Thus, "front-ends" have been developed for RDBMS products so that data retrieved from the RDBMS can be aggregated, summarized, consolidated, summed, viewed, and analyzed. However, even these "front-ends" do not easily provide the ability to consolidate, view, and analyze data in the manner of "multi-dimensional data analysis." This type of functionality is also known as **on-line analytical processing (OLAP).**

A thorough state of the art description of OLAP technology is provided by Erick Thompson, "OLAP Solutions - Building Multidimensional Information Systems", Wiley Computer OLAP generally comprises numerous, speculative "what-if" and/or "why" data model scenarios executed by a computer. Within these scenarios, the values of key variables or parameters are changed, often repeatedly, to reflect potential variances in measured data. Additional data is then synthesized through animation of the data model. This often includes the consolidation of projected and actual data according to more than one consolidation path or dimension.

Data **consolidation** or **aggregation** is the process of synthesizing data into essential knowledge. The highest level in a data consolidation path is referred to as that data's dimension. A given data **dimension** represents a specific perspective of the data included in its associated consolidation path. There are typically a number of different dimensions from which a given pool of data can be analyzed. This plural perspective, or **Multi-Dimensional Conceptual View,** appears to be the way most business persons naturally view their enterprise. Each of these perspectives is considered to be a complementary data dimension. Simultaneous analysis of multiple data dimensions is referred to as **multi-dimensional data analysis.**

OLAP functionality is characterized by dynamic multi-dimensional analysis of consolidated data supporting end user analytical and navigational activities including:

- calculations and modeling applied across dimensions, through hierarchies and/or across members;
- trend analysis over sequential time periods;
- slicing subsets for on-screen viewing;
- drill-down to deeper levels of consolidation;
- reach-through to underlying detail data; and
- rotation to new dimensional comparisons in the viewing area.

A key feature of any multidimensional OLAP system is the ability to define a dataset in terms of multiple dimensions. Loosely speaking, dimensions may be thought of as major perspectives, entities, factors, or components. So on multidimensional dataset may be thought of as multi-key or multi-attribute data set. The benefit of handling multiple dimensions is in being able to represent the full richness of a dataset in a single model or cube.

A further key feature of any multidimensional OLAP system is the hierarchical nature of the dimensions. Any dimension such as "time", "products", and "stores" can have multiple levels of granularity. For example, the "time" dimension may have a day-level granularity, a week-level granularity, a month-level granularity , a quarter-level granularity, and so on. This is indispensable for working with larger data sets that invariably need to be aggregated, analyzed, and viewed across multiple levels of aggregation.

A further key feature of any dimensional OLAP system is the ability to attach formulas to members of dimensions. Because a single member of one dimension, say the "Sales" member from a variables dimension, interacts with every single member from every other dimension, a single-dimensional formula has a powerful application range frequently doing the same work that would otherwise take thousands of spreadsheet formulas. Also more multi-dimensional formulas work equally well in all dimensions. Multi dimensional formulas dramatically simplify the process of defining aggregation and analysis calculations.

The dimensions are used to build up the **hierarchy information** which is the basis for the later analysis of the data. With the hierarchy information the user has the capability to see aggregated business information on higher levels. It is also possible to drill down from some higher level information to the lower level once to examine individual aspects of differences within the data.

Typically the multi-dimensional data is organized and represented in a form of a **(hyper-)cube**, wherein the various dimensions of the data are reflected as cube dimensions.

As the available amount of raw data and the number of available variable types, which potentially could be used as dimensions for multidimensional database tables, is so huge, it is one of the most fundamental problems within OLAP technology to select the "correct" variable types to be used as OLAP cube dimensions. The problem is even increased, if one knows that as a rule of the thumb a multi dimensional database table should not exceed about 8 dimensions. Choosing a wrong dimension reduces the freedom of selecting other variable types as dimensions of a multidimensional database table. This problem occurs during the setup phase, wherein the structure of the multidimensional database tables are defined implementing the internal representations of the OLAP cube. Identifying the "correct" variable types to be used as dimensions of the multidimensional database tables is of dramatic influence on the success of OLAP technology.

First of all a selection of certain variable types corresponds to a significant reduction of the huge amount of business data which is to be analyzed and to be used to populate the multidimensional database tables.

Second, the nature and the number of the selected variable types defines the size of OLAP cubes in terms of the amount of required storage.

The following example serves the purpose to establish an impression for the huge amount of required storage to build the OLAP multidimensional data structures to store the input data and derived, the computed data. The size of the multidimensional database table is a function of the number of dimensions (defined by the variable types) and the number of elements in each dimension. The maximum possible size of such a multidimensional database table is obtained by multiplying together the number of elements in each dimension, for the following example:

Dimension 1 has a 50 members ,
Dimension 2 has 100 members,
Dimension 3 has 12 members,
Dimension 4 has 1000 members,
Dimension 5 has 12000 members,

as total number of potential members one achieves the large number of 50 * 100 * 12 * 1000 * 12000 = 720,000,000,000. If just one more dimension, that is a further variable type, with only 10 members would be added to this multidimensional database table, the above maximum potential size of the multidimensional database table would have to be multiplied by a factor of 10. This phenomenon is known as database explosion. As a result, OLAP databases are very large and require significant resources to load and to calculate. To avoid this OLAP database explosion designers have to constrain the number of dimensions in each multidimensional database table. The mean storage requirements to store an OLAP cube with about 8 dimensions is in the range of 5 to 15 gigabytes of data. Thus, any "wrong" dimension introduced to the multidimensional database table could result into a model which is no longer treatable anymore. Vice versa, "wrong" dimensions and too many dimensions do increase the processing time significantly, which is a major drawback within OLAP technology wherein many analysis steps are performed interactively with a user. Moreover the quality of the analysis results due to OLAP technology is significantly improved if the "Correct" variable types are selected; avoiding variable types within the multidimensional database tables with minor importance to the measure data is also an aspect of improved analysis quality.

### 1.3 Objective of the Invention

The invention is based on the objective to provide a technology for automatically determining the variable dimensions of multi-dimensional database tables forming the representation of OLAP cubes and being the starting point for OLAP processing.

### 2. Summary and Advantages of the Invention

The above mentioned problems and the objectives of the invention are solved by the independent claims. Further advantageous arrangements and embodiments of the invention are set forth in the respective subclaims.

The present invention relates to means and a computerized method for automatically determining one or more variable dimensions for a multi-dimensional database table, whereby the multi-dimensional database table also comprises at least one pre-defined measure dimension for storing values of one or more measure types.

The current invention suggests to treat for the purpose of determination of the variable dimensions a multitude of input records as an implicit, yet unknown functional relationship between the measure types (as a dependent variables) and the variable types (as independent variables). Based on this insight it is then suggested to calculate a regression function as a prediction model for the (dependent) measure types based on the (independent) variable types utilizing the multitude of input records. The most significant variable types contributing to this prediction model are then selected as variable dimensions for the multidimensional database table, i.e. as the OLAP cube dimensions.

The current invention solves one of the most fundamental problems within OLAP technology, namely the problem to select the "correct" variable types to be used as variable dimensions of a multidimensional database table also defining the so-called OLAP cube dimensions. While according to the state of the art human experts are required to perform this selection process based on a large amount of experience and "feeling" for the data to be treated by OLAP technology, the current invention proposes an automatic and computerized methodology for solving this problem.

Selection of the "correct" variable types corresponds to a significant reduction of the huge amount of business data which is to be analyzed and to be used to populate the multidimensional database tables. Selection of "wrong" variable dimensions are avoided. Both aspects together are responsible that the extreme complex multidimensional database table problems become treatable in terms of required storage and processing time. Moreover the quality of the analysis results due to OLAP technology is significantly improved if the "Correct" variable types are selected; avoiding variable types within the multidimensional database tables with minor importance to the measure data is also an important aspect of improved analysis quality.

## 3. Brief Description of the Drawings

**Figure 1** is a block diagram illustrating a hardware environment used to implement a preferred embodiment of the present invention.

**Figure 2** is a diagram that illustrates the conceptual structure (i.e., an outline) of a multi-dimensional database according to the present invention.

**Figure 3** is a diagram that illustrates the logical structure of a multi-dimensional database according to the present invention.

**Figure 4** is a diagram that illustrates a structure for storing multi-dimensional data in a relational database structure according to the present invention.

**Figure 5** is a flow chart depicting the determination process of the most significant variable types as variable dimensions of a multidimensional database table based on the calculation of regression functions.

**Figure 6** is a flow chart depicting in more details how according to a preferred embodiment of the invention a regression function is calculated by an iteration process calculating partial regression functions for the individual variable types.

**Figure 7** is a flow chart depicting in more details how according to a preferred embodiment of the invention a regression function is calculated by an iteration process based on the calculation of specific regression functions namely regression polynomials.

## 4. Description of the Preferred Embodiment

In the drawings and specification there has been set forth a preferred embodiment of the invention and, although specific terms are used, the description thus given uses terminology in a generic and descriptive sense only and not for purposes of limitation.

The present invention can be realized in hardware, software, or a combination of hardware and software. Any kind of computer system - or other apparatus adapted for carrying out the methods described herein - is suited. A typical combination of hardware and software could be a general purpose computer system with a computer program that, when being loaded and executed, controls the computer system such that it carries out the methods described herein. The present invention can also be embedded in a computer program product, which comprises all the features enabling the implementation of the methods described herein, and which - when loaded in a computer system - is able to carry out these methods.

Computer program means or computer program in the present context mean any expression, in any language, code or notation, of a set of instructions intended to cause a system having an information processing capability to perform a particular function either directly or after either or both of the following a) conversion to another language, code or notation; b) reproduction in a different material form.

Also, if the term database is used within the current specification, this is not to be understood as a limitation for instance to relational database management systems, hierarchical database management systems and the like. A database according to the current invention can also mean a flat file for instance or any other collection of corresponding data. Moreover the notion of a database table does not only referred to a collection of data within a persistent storage medium, it also comprises data within volatile memory (for instance being the result of a pre-processing step wherein a multitude of data sources are combined into said database table). Furthermore, the notion of a table is to be an understood from a conceptual perspective only.

## 4.1 Overview on OLAP Technology

The present invention comprises an OLAP system that is designed for a wide-range of multi-dimensional reporting and analysis applications. The OLAP system is based both on Hyperion Software's Essbase OLAP software and IBM's DB2 RDBMS software. The present invention utilizes a number of components from Hyperion Software's Essbase OLAP system, including components that provide data access, navigation, application design and management and data calculation. However, the present invention comprises new elements that automatically determine the most important variable dimensions to be reflected within a multidimensional database table and the OLAP cubes.

The relational database utilized by the present invention provides the capacity of industry leading relational databases, and can be managed by familiar RDBMS systems management, backup, and recovery tools. It also offers the advantage of providing access to data using standard SQL (Structured Query Language). In addition, the present invention is designed for applications with very large data volumes. Further, the present invention leverages the existing RDBMS skills of information technology professionals.

The present invention differs from prior art ROLAP (Relational-OLAP) products in significant ways. Prior art ROLAP products, for example, are unsuited for applications which require complex calculations, read/write support, or high numbers of concurrent users. In addition, prior art ROLAP products require extensive support staffs or consultants to develop and deploy applications.

The present invention does not share any of these limitations. Because it integrates Hyperion Software's Essbase OLAP software with IBM's DB2 RDBMS software, the present invention provides simplified application design, robust calculation capabilities, and flexible data access coupled with scalability of user access. Significant advantages of the present invention over ROLAP include: performance; automatic table, index and summary management; robust analytical calculations; multi-user read and write access; and security.

With regard to performance, the present invention is designed to deliver consistent, fast response measured in seconds regardless of database size. Prior art ROLAP products measure response time in tens of seconds, minutes or hours.

With regard to automatic table, index and summary management, the present invention automatically creates and manages tables and indices within a star schema in the relational database. The present invention can also populate the star schema with calculated data. Prior art ROLAP products require teams of database architects to manage hundreds or thousands of summary tables manually in order to deliver acceptable end-user performance.

With regard to robust analytical calculations, the present invention is designed to perform high-speed data aggregations (revenue by week, month, quarter and year), matrix calculations (percentages of totals), cross-dimensional calculations (market share and product share) and procedural calculations (allocations, forecasting). Prior art ROLAP products provide less robust calculation capabilities.

With regard to multi-user read and write access, the present invention is designed to support multi-user read and write access which enables operational OLAP applications such as budgeting, planning, forecasting, modeling, "what-if'ing" etc. On the other hand, prior art ROLAP products are read-only.

With regard to security, the present invention is designed to deliver robust data security down to the individual data cell level. Prior art ROLAP products provide no security, or only limited application level security.

The capabilities of the present invention are the same as those of Hyperion Software's Essbase OLAP software, including sophisticated OLAP calculations, comprehensive OLAP navigation features, complex database access support and multi-user read/write functionality. In addition, front-end tools, system management tools and applications from Hyperion Software and leading third parties will also work with the present invention. Consulting and education companies that have developed expertise with Hyperion Software's Essbase OLAP software can immediately apply their experience and knowledge to the present invention.

Although the present specification describes the use of IBM's DB2 RDBMS software, those skilled in the art will recognize that the present invention can use DB2, Oracle, Informix, Sybase, or other RDBMS software, and can run on computers using IBM OS/2, Microsoft Windows NT, IBM-AIX, Hewlett-Packard HP-UX, Sun Solaris, and other operating systems.

**4.1.1 Hardware Environment**

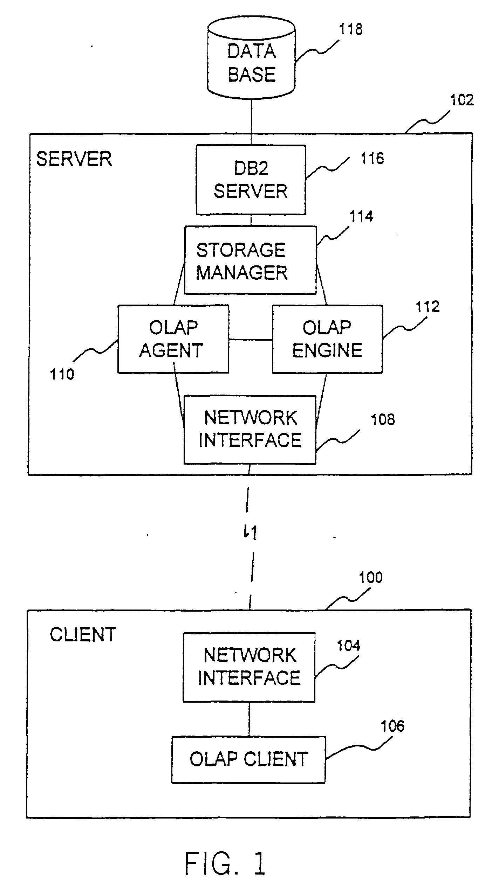

FIG. 1 is a block diagram illustrating a hardware environment used to implement the preferred embodiment of the present invention. In the hardware environment, a client/server architecture is illustrated comprising an OLAP client computer 100 coupled to an OLAP server computer 102. In the hardware environment, the OLAP client 100 and OLAP server 102 may each include, inter alia, a processor, memory, keyboard, or display, and may be connected locally or remotely to fixed and/or removable data storage devices and/or data communications devices. Each of the computers 100 and 102 also could be connected to other computer systems via the data communications devices. Those skilled in the art will recognize that any combination of the above components, or any number of different components, peripherals, and other devices, may be used with the computers 100 and 102. Those skilled in the art will also recognize that the present invention may be implemented on a single computer, rather than multiple computers networked together.

The present invention is typically implemented using one or more computer programs, each of which executes under the control of an operating system, such as OS/2, Windows, DOS, AIX, UNIX, MVS, etc., and causes the computers 100 and 102 to perform the desired functions as described herein. Thus, using the present specification, the invention may be implemented as a machine, process, or article of manufacture by using standard programming and/or engineering techniques to produce software, firmware, hardware or any combination thereof.

Generally, the computer programs and/or operating system are all tangibly embodied in a computer-readable device or media, such as memory, data storage devices, and/or data communications devices, thereby making a computer program product or article of manufacture according to the invention. As such, the terms "article of manufacture" and "computer program product" as used herein are intended to encompass a computer program accessible from any computer readable device or media.

Moreover, the computer programs and operating system are comprised of instructions which, when read and executed by the computers 100 and 102, cause the computers 100 and 102 to perform the steps necessary to implement and/or use the present invention. Under control of the operating system, the computer programs may be loaded from the memory, data storage devices, and/or data communications devices into the memories of the computers 100 and 102 for use during actual operations. Those skilled in the art will recognize many modifications may be made to this configuration without departing from the scope of the present invention.

In the example illustrated in FIG. 1, the present invention includes a network interface program 104 and an OLAP client program 106 executed by the OLAP client 100, and a network interface program 108, an OLAP agent program 110, an OLAP engine program 112, a relational storage manager (RSM) program 114, and a DB2 server program 116 executed by the OLAP server 102. The DB2 server program 116, in turn, performs various database operations, including search and retrieval operations, termed queries, insert operations, update operations, and delete operations, against one or more relational databases 118 stored on a remote or local data storage device.

The present invention utilizes a number of components from Hyperion Software's Essbase OLAP system, including the network interface 104, OLAP client 106, network interface 108, OLAP agent 110, and OLAP engine 112. These components provide data access, navigation, application design and management and data calculation. However, the relational storage manager 114 and DB2 server 116 comprise new elements that access (e.g., store and retrieve) data for the OLAP system in a relational database.

Those skilled in the art will recognize that the hardware environment illustrated in FIG.1 is not intended to limit the present invention. Indeed, those skilled in the art will recognize that other alternative hardware environments may be used without departing from the scope of the present invention.

**4.1.2 Conceptual Structure of the Multi-Dimensional Database**

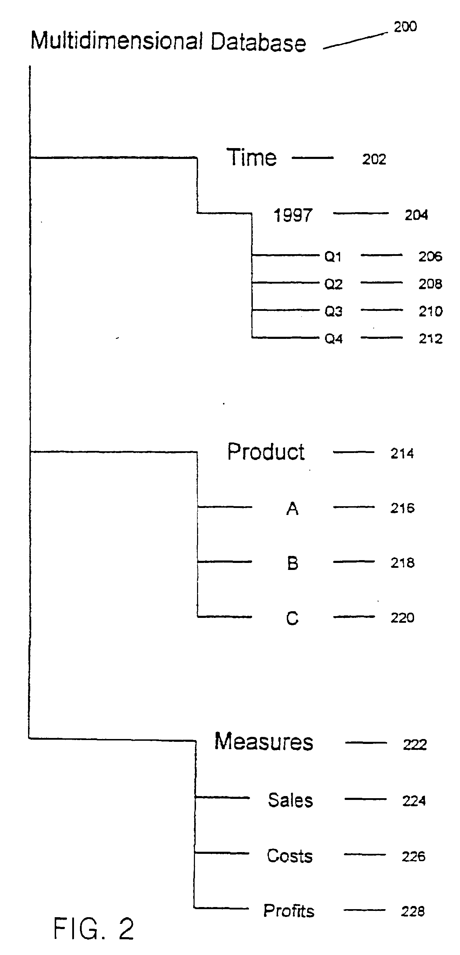

FIG. 2 is a diagram that illustrates the conceptual structure (i.e., an outline) of a multi-dimensional database 200 according to the present invention. A dimension 202, 214, or 222 is a structural attribute that is a list of members, all of which are of a similar type in the user's perception of the data. For example, the year 1997 204 and all quarters, Q1 206, Q2 208, Q3 210, and Q4 212, are members of the Time dimension 202. Moreover, each dimension 202, 214, or 222 is itself considered a member of the multi-dimensional database 200.

**4.1.2 Logical Structure of the Multi-Dimensional Database**

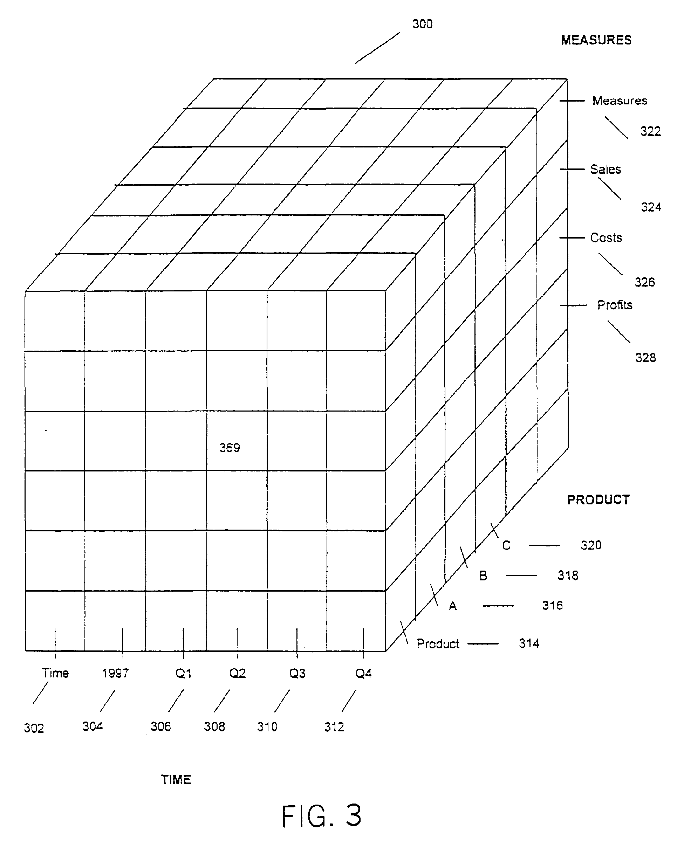

FIG. 3 is a diagram that illustrates the logical structure of a multi-dimensional database 300 according to the present invention. Generally, the multi-dimensional database 300 is arranged as a multi-dimensional array, so that every data item is located and accessed based on the intersection of the members which define that item. The array comprises a group of data cells arranged by the dimensions of the data. For example, a spreadsheet exemplifies a two- dimensional array with the data cells arranged in rows and columns, each being a dimension. A three-dimensional array can be visualized as a cube with each dimension forming an edge. Higher dimensional arrays (also known as Cubes or Hypercubes) have no physical metaphor, but they organize the data in a way desired by the users.

A dimension acts as an index for identifying values within the Cube. If one member of the dimension is selected, then the remaining dimensions in which a range of members (or all members) are selected defines a sub-cube in which the number of dimensions is reduced by one. If all but two dimensions have a single member selected, the remaining two dimensions define a spreadsheet (or a "slice" or a "page"). If all dimensions have a single member selected, then a single cell is defined. Dimensions offer a very concise, intuitive way of organizing and selecting data for retrieval, exploration and analysis.

A single data point or cell occurs at the intersection defined by selecting one member from each dimension in a cube. In the example cube shown in FIG. 3, the dimensions are Time, Product, and Measures. The cube is three dimensional, with each dimension (i.e., Time, Product, and Measures) represented by an axis of the cube. The intersection of the dimension members (i.e., Time 302, 1997 304, Q1 306, Q2 308, Q3 310, Q4 312, Product 314, A 316, B 318, C 320, Measures 322, Sales 324, Costs 326, and Profits 328) are represented by cells in the multi- dimensional database that specify a precise intersection along all dimensions that uniquely identifies a single data point. For example, the intersection of Q2 308, Product 314 and Costs 326 contains the value, 369, representing the costs of all products in the second quarter of 1997.

Cubes generally have hierarchies or formula-based relationships of data within each dimension. Consolidation involves computing all of these data relationships for one or more dimensions. An example of consolidation is adding up all sales in the first quarter. While such relationships are normally summations, any type of computational relationship or formula might be defined.

Members of a dimension are included in a calculation to produce a consolidated total for a parent member. Children may themselves be consolidated levels, which requires that they have children. A member may be a child for more than one parent, and a child's multiple parents may not necessarily be at the same hierarchical level, thereby allowing complex, multiple hierarchical aggregations within any dimension.

**Drilling down** or **up** is a specific analytical technique whereby the user navigates among levels of data ranging from the most summarized (up) to the most detailed (down). The drilling paths may be defined by the hierarchies within dimensions or other relationships that may be dynamic within or between dimensions. For example, when viewing data for Sales 324 for the year 1997 304 in FIG. 3, a drill-down operation in the Time dimension 302 would then display members Q1 306, Q2 308, Q3 310, and Q4 312.

### 4.1.3 Relational Database Structure

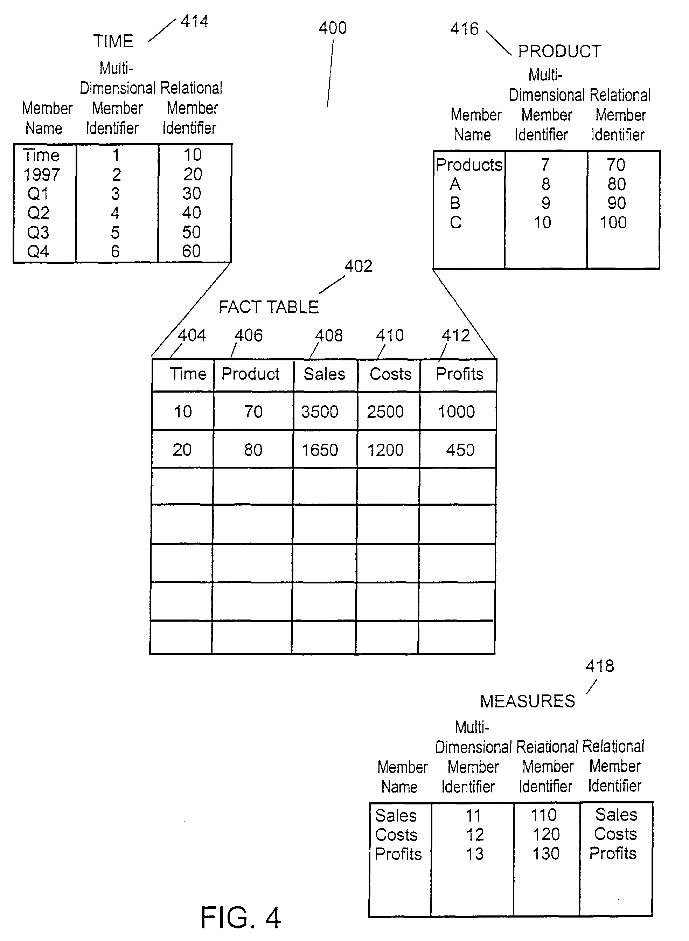

FIG. 4 is a diagram that illustrates a structure for storing multi-dimensional data in a relational database structure according to the present invention. The present invention stores data in a star schema 400 in the relational database 118. A **star schema** 400 is a set of relational tables including one or multiple main tables 402 and related dimension tables 414, 416, and 418, wherein the dimension tables 414 and 416 intersect the main table 402 via common columns, and wherein the dimension table 418 has a column in the main table 402 corresponding to each of its rows. A star schema 400 has several benefits over storing information in traditional RDBMS tables used for on-line transaction processing (OLTP).

Because a star schema 400 is simple, having few tables, it minimizes the complexity required to process database operations. This helps both to speed performance and to ensure correct results of database operations.

Moreover, the use of a star schema 400 is a well known, standard model, and many relational databases 118 have built in optimization for it. By adhering to this standard model, the present invention automatically takes advantage of any such optimization.

In the example of FIG. 4, the boxes represent the **fact table** 402 and **dimension tables** 414, 416, and 418. The connections between the boxes 402, 414 and 416 represent **star joins** between tables. The star schema 400 thus comprises fact tables 402, which is joined to one or more dimension tables, TIME 414 and PRODUCT 416, according to specified relational or conditional operations. The fact table 402 holds data values, while the dimension tables TIME 414, PRODUCT 416, and MEASURES 418 hold member information. As a result, the dimension tables 414, 416, and 418 are relatively small, and the fact table 402 is usually very large.

The dimension tables TIME 414 and PRODUCT 416 are usually joined to the fact table 402 with an equivalence condition. In this example of a star schema 400, there are no join conditions between the dimension tables TIME 414, PRODUCT 416, and MEASURES 418 themselves.

In the preferred embodiment, one dimension, called an "**Anchor**" **dimension,** is treated differently from the other dimensions, called **"non-anchor" dimensions,** in that all of its members are mapped to columns in the fact table 402. For example, in FIG. 4, the MEASURES dimension 418 is the anchor dimension. There is one column in the fact table (i.e., SALES 408, COSTS 410, and PROFITS 412) for each member, Sales, Costs, and Profits, of the **MEASURES dimension** 418. The fact table 402 also contains one column, TIME 404 and PRODUCT 406, for each other non-anchor dimension, TIME 414 and PRODUCT 416.

### 4.1.4 Fact Table

In the preferred embodiment of the present invention, there is one fact table 402 for each Cube. Its purpose is to hold the actual data values of the Cube. In other embodiments, however, more than the one fact table 402 per cube maybe supported to deal with large numbers of members.

The fact table 402 has a dimension column corresponding to each non-anchor dimension table 414 and 416. The dimension columns of the fact table 402 hold relational member identifiers, and the non-anchor dimension tables 414 and 416 hold the mapping between those relational member identifiers and the member names and multi-dimensional member identifiers. The data values in the fact table 402 are indexed by the relational member identifiers from each of the dimension columns.

One row in the fact table 402 contains all data values for a unique combination of members from the different non-anchor dimension tables 414 and 416. Specifically, the dimension columns 404 and 406 contain relational member identifiers corresponding to the multi-dimensional member identifiers, and the member columns 408, 410, and 412 contain data values. For example, the first row in the example of FIG. 4, holds the Sales of 3500, Costs of 2500, and Profits of 1000 for every Product and all Times. Moreover, the second row, in the example of FIG. 4, holds the Sales of 1650, Costs of 1200, and Profits of 450 for Product A during the 1997 Time frame.

The fact table 402 only hold rows for valid combinations of members from the non-anchor dimensions. So, for example, if a particular product is not sold in a year, there will be no sales, costs or profit figures for any time period for that product in that year. Consequently, the fact tables 402 through 422 would not hold any rows for these combinations.

### 4.1.5 Dimension Tables

As described above, there is one dimension table for each dimension defined in the Cube (i.e., based on the outline). The purpose of the dimension tables is to hold all information relevant to the members of a particular dimension.

Each dimension table contains one row for each member defined in the associated dimension. Note that the dimension name itself is considered to be a member since it represents the top level of the hierarchy for that dimension. The columns are as follows:

**MemberName**    This is the member name. It is the user-entered name for each member. The value of the MemberName is set to a NULL value if this member is deleted. When a RelMemberId is required, the RelMemberId corresponding to a MemberName which is a NULL value is reused.

**RelMemberName**    This is the relational member name. It is only used in the Anchor dimension table (because the members from this dimension map to columns in the fact table 402). This column therefore needs to contain valid relational column names. Therefore, this column may contain member names which have been modified from those stored in MemberName, if necessary.

**RelMemberId**    This is the relational member identifier. This contains an identifying number for each member used to access data in the relational database. This number is unique within the dimension table. This column is used to 'join' the dimension table to the fact table. Members always retain the same relational member identifier throughout their life time. A relational member identifier may be reused if a member is deleted and another member is created.

**MemberId**    This is the multi-dimensional member identifier. This contains an identifying number allocated to the member by Essbase. When a Cube definition is altered in Essbase and the Essbase database is restructured, this value may be changed by Essbase. This is a NULL value if MemberName is a NULL value.

The MemberName is typically obtained from the outline. The MemberId is assigned by Hyperion Software's Essbase OLAP software and is used by this software to access multi-dimensional data stored in dense data blocks in a multi-dimensional database 300. The RelMemberId is the common column between the non-anchor dimension tables 414 and 416 and the fact table 402 that is used to join the tables 402, 414, and 416 and is used to access data in the relational database 118 (i.e., fact table 402). The MemberId, which is used internally by Hyperion Software's Essbase OLAP software, maps to the RelMemberId, which is used by the relational database 118 to access data.

### 4.1.6 Accessing Multi-Dimensional Data

To access the multi-dimensional data in the relational database 118, a user interacts with the OLAP client program 106 executed by the OLAP client 100. This interaction results in a request (i.e., command) for a database operation being formed, which is transmitted to the OLAP agent 110 and/or OLAP engine 112 executed by the OLAP server 102 via the network interface programs 104 and 108. The OLAP agent 110 communicates with the OLAP engine 112, and the OLAP engine 112 executes functions via the relational storage manager 114 to access the multi-dimensional data from a data storage manager. In Hyperion Software's Essbase OLAP software, data is requested by specifying one or more sparse index keys (i.e., a sparse index key is an encoding of one member from each sparse dimension) that identify one or more dense data blocks in the multi-dimensional database 300.

In the present invention, these sparse index keys comprise combinations of one MemberId for each sparse dimension used internally in Hyperion Software's Essbase OLAP software. The relational storage manager 114 requests the OLAP Engine 112 to decompose the sparse index key into a list of MemberIds. The relational storage manager 114 maps the MemberIds to the RelMemberIds used in the relational database 118 via the respective non-anchor dimension tables 414 and 416 in the relational database 118. Then, the RelMemberIds are used to access the respective non-anchor dimension tables 414 and 416 in the relational database 118. The resulting rows of the non-anchor dimension tables 414 and 416 are joined to corresponding rows in the fact table 402. The joined rows of the fact table 402, which thus meet the criteria of the sparse index keys, are returned by the DB2 server 116 to the relational storage manager 114. The rows returned have RelMemberIds followed by values for each of the members of the anchor dimension (e.g., the MEASURES dimension 418 in FIG. 4). The relational storage manager 114 then converts the RelMemberIds into MemberIds and reformats the rows from the fact table 402 into a "dense data block". The reformatted rows are passed to the OLAP engine 112, which ultimately return the desired data to the OLAP client 106.

In this manner, the relational database 118 can be used to emulate multi-dimensional data in a multi-dimensional database 300. Moreover, by converting between MemberIds of the sparse index keys and RelMemberIds, the DB2 server 116 is able to treat the data in the relational database 118 as dense data blocks for Hyperion Software's Essbase OLAP software, while actually maintaining the data in a relational database 118.

In an alternative embodiment, the MemberIds and the RelMemberIds are mapped to each other using two in-memory arrays. The array used to map MemberIds to RelMemberIds has an element for each MemberId containing the corresponding RelMemberId. The array used to map RelMemberIds to MemberIds has an element for each RelMemberId containing the corresponding MemberId. These arrays are generated after the outline is created, and they are re-constructed each time the relational storage manager 114 initializes or "opens" the multi-dimensional database and after each outline re-structure.

In Hyperion Software's Essbase model of a multi-dimensional database, the dense data blocks of the multi-dimensional database are ordered by the numerical values of their sparse index keys. In the present invention, the relational storage manager 114 maintains the ordering of the dense data blocks by storing the sparse index keys in a key table. The relational storage manager 114 holds also holds additional information about each dense data block in the key table. In particular, the information includes status information (e.g., usage information) and timestamps (e.g., age information).

### 4.2 A New Interpretation of the Measure Dimensions of Multidimensional Database Tables

The typical starting point of OLAP technology is a more or less huge amount of input records. These input record form the source from which OLAP technology is extracting and aggregating data to be used to populate a multidimensional database table. The input records may originate from a multitude of different files, data bases and the like. From a conceptual perspective the input records are interpreted as comprising values of a multitude of different **variable types** and values of a multitude of different **measure types**. Usually the identity of the measure types is evident; they can be identified as the typical business targets of the business to be analyzed. These units-bearing data types are either measured or derived. "Sales", "Costs", "Profit", and "Interest rates" are typical examples of measure types. These measure types typically are treated and kept separate from the variable dimensions according to which they are organized. OLAP products combine these measure types either in a single or multiple measure dimensions of the multidimensional database table.

Therefore, while the identity of the measure dimension is evident from the multitude of input records the identity of the variable types to be used as variable dimensions according to which the measure dimensions is organized is far from being obvious. The cause of these difficulties is on one hand the very large number of candidate variable types which could be used as variable dimensions and on the other hand the fact that only very few variable dimensions (currently in the range of 8 dimensions) can effectively be processed by current state of the art OLAP technology.

According to the current state of the art it is completely left up to human insight and human "feeling" to select the hopefully "correct" variable types as variable dimensions for the multidimensional database table.

Thus, the very point of the current invention is to provide a computerized and automatic method for determining the variable dimensions of a multidimensional database table according to which the measure dimension(s) is(are) organized. Or in other words the invention provides a the teaching for determining the M most significant variable dimensions for a set of L given measure types selected from a multitude of N potential variable types, while M is in significantly smaller than N.

A chain of observations to develop a solution could start with the basic idea to automatically determine the most "Relevant" variable types. From this point one could argue that the most relevant variable types are those with the "most significant influence" on the values of the measure types. This approach introduces a most important and implicit new concept: a functional relationship between the measure types and the variable types is assumed. The current invention therefore suggests to treat for the purpose of determination of the variable dimensions the multitude of input records as an implicit, yet unknown functional relationship between the measure types (as a dependent variables) and the variable types (as independent variables). Based on this insight it is then suggested to calculate a prediction model for the (dependent) measure types based on the (independent) variable types utilizing the multitude of input records. The most significant variable types contributing to this prediction model are then selected as variable dimensions for the multidimensional database table. The current invention suggests to use regression function technology for the calculation of a prediction model.

Expressed with a statistical terminology the basic idea of the current invention can be formulated as follows: a high correlation between the variances of the values of the measure types and the variances of the values of the variable types identifies those variable types to be used as variable dimensions.

### 4.3 Determination of the Most Significant Variable Types by Regression Functions in Case of a Single Measure Type

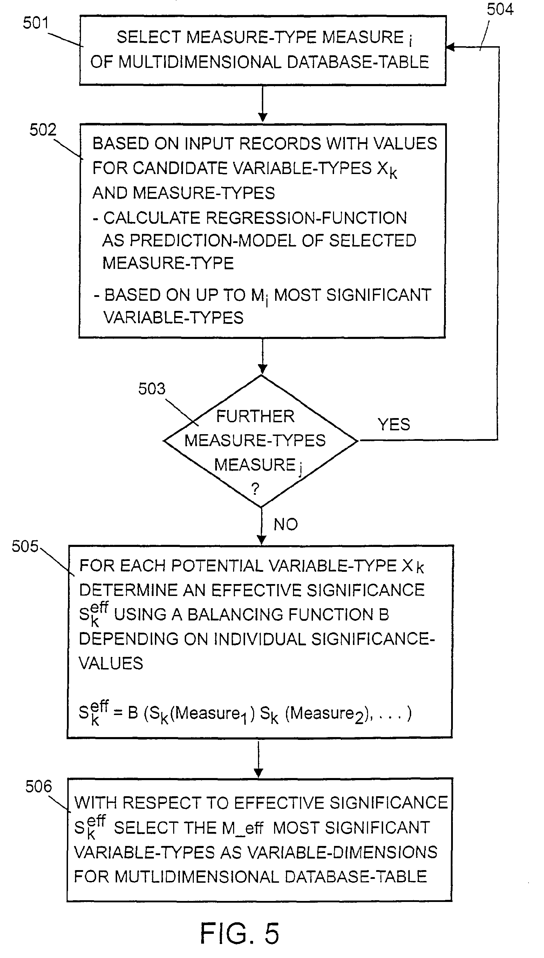

Fig. 5 is a flow chart depicting the determination process of the most significant variable types as variable dimensions of a multidimensional database table based on the calculation of regression functions.

The proposed teaching starts by selecting a certain measure type $Measure_i$ in step 501. Based on the input records with values for the individual candidate variables $X_k$ and the measure type $Measure_i$ it is suggested to calculate within step 502 a regression function as prediction-model of the values of the measure type $Measure_i$. The regression function is calculated such, that it depends on the sub-set of "up to" $M_i$ most significant of said variable types. During the calculation of the regression function it is suggested to calculate in addition for each of said up to $M_i$ variable types a significance value $S_k(Measure_i)$ as an indication of the influence of a certain variable type onto the measure type. This problem can be described as regression problem in the form of

$$Measure_i = A + \sum_{j=1}^{N} f_i(Xj) + Error \qquad \text{(eq. 1)}$$

where $f_i(Xj)$ is a regression function, $Measure_i$ is the associated measure, $X_j$ is one of the available variable types, A denotes the unknown coefficient.

It is important to point out the following aspects of the suggested teaching:

1. The regression function calculated within step 502 does not depend on all of the N independent variable types but only on a the subset of M independent variable types.
2. These M independent variable types represent the most significant ones in terms of correlation to and influence on the measure type. As outlined below in further detail a significance measure will be used which is guiding an iterative calculation process to determine the regression function depending on the M most significant variable types.
3. Moreover it is suggested to determine the "up to M" most significant variable types; that is, even a set of most significant independent variable types smaller than M will be calculated, if the predictive quality of the calculated regression function is not improved by including further independent variable types.

This methodology has important advantages compared to other possible approaches.

In an **approach A** one could think of calculating a regression function as prediction model depending on "all" available variable types associating each variable type with a specific significance value. Then the M most significant variable types just are selected as variable dimensions of the multidimensional database table (as OLAP cube dimensions). It is most important to note that such an approach suffers the deficiency that the significance values of the selected dimensions actually are influenced from the participation of the other (N-M not selected) variable types within the regression function. Therefore, such an approach does not allow to make any statement on the actual significances of the smaller subset of M variable types, if they would exclusively contribute to the regression function.

The following example (for explanation purposes kept extremely simple, almost trivial) explains this situation. The example is based on input records in comprising the following potential variable types: "SERVICE", "AGRI", "INDUS" and a certain measure type, which it is not important for the current explanation. Based on one and the same data set, i.e. the input records, on one hand the teaching of the current invention is applied calculating a regression function depending on the values of up to 1 significant variable type only (the calculation made use of the further embodiments of the current invention as outlined within chapter 4.4, the stepwise polynomial regression ) and on the other hand above approach A is applied calculating a regression function depending on all 3 variable types. Using the teaching of the current invention the following result was achieved:

| Dimension | Significance |
|---|---|
| AGRI | 0,99989741 |

Using above mentioned approach A the following result was achieved:

| Dimension | Significance |
|---|---|
| SERVICE | 0,89192000 |
| AGRI | 0,86274000 |
| INDUS | 0,30481820 |

As can be seen from the comparison of the two results the cut off optimization finds more significant dimensions and, most important, it also changes the significance order of the variable types. Using the approach A the variable type SERVICE is the most significant variable type which is different to the result according to the current teaching, where AGRI is the only and the most significant dimension. This example illustrates the advantages of the proposed technology for a single measure. For multiple measures (outlined in further details in a chapter 4.5 below) the potential error of a simple cut off criteria will increase, because the significance errors for a single measure are aggregated to get the total significance.

In an other **approach B** one could think of calculating a regression function as prediction model depending on "exactly" the subset of M most significant variable types. The drawback of this approach is that the given maximum number of variable types is not constraining to be the optimum set of dimensions which might be much smaller. In general this approach B does not allow to find a subset of most significant variable types which is smaller than M, and which might represent together with the regression function a prediction model with the same or better prediction quality based on a smaller set of input information. In specific this possibility of further reduction of the number of variable types is of major importance for the area of determination of OLAP dimensions.

All above deficiencies are avoided by the methodology proposed by the current invention.

If there is only one measure type available then the most significant variable types are selected as variable dimensions of the multidimensional database table. In case further measures types are part of the multidimensional database table the proposed teaching iterates in step 503 and step 504 by selecting one measure type after the other.

### 4.4 Calculating Regression Functions as Regression Polynomials by Stepwise Polynomial Regression

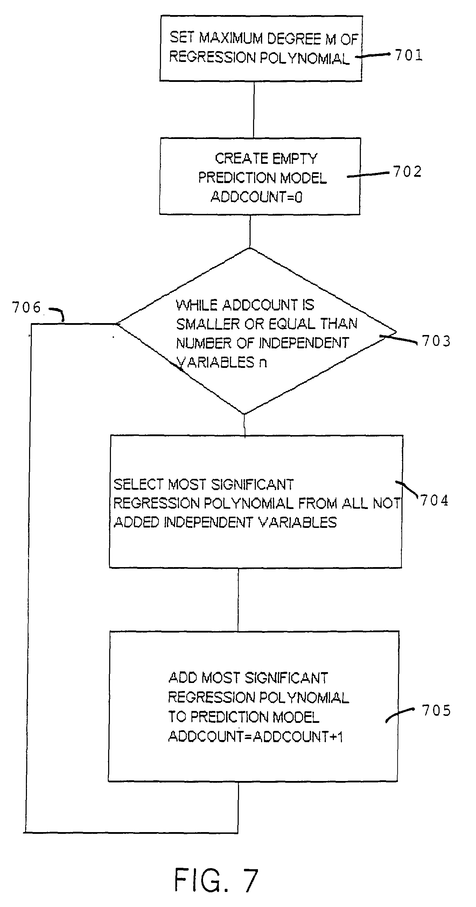

For an explanation of a further embodiment of the current invention relating to the specific technology of calculating a regression function the focus of the discussion is put temporarily on Fig. 7. Fig. 7 is a flow chart depicting in more details how according to a preferred embodiment of the invention a regression function is calculated by an iteration process. Fig. 7 concentrates as a first approach on the calculation of specific regression functions, namely regression polynomials. In the next chapter an extension to general regression functions will be described.

The current invention proposes a new methodology for determining a prediction model in form of a regression polynomial called **Stepwise Polynomial Regression**. The following description is somewhat generalized from the foregoing context and is dedicated in general terms to the problem of calculating a regression polynomial for predicting the values of a dependent variable depending on set of independent variables. As training set the above mentioned input records are utilized. Stepwise Polynomial Regression is an enhanced regression method improving the multiple polynomial regression approach according to the state of the art. Multiple polynomial regression predicts the value of the dependent variable on the basis on n independent variables, each of which being expressed by a polynomial of a degree m **common** to all polynomials comprised in the prediction model.

In contrast to multiple polynomial regression, where each independent variable is expressed by a polynomial of the same degree, Stepwise Polynomial Regression suggests to use polynomials of potentially different degrees of the various independent variables. Moreover as a further difference to the multiple polynomial regression approach the current invention proposes a techniques allowing to individually determine the particular degree to be used for each independent variable. By selecting a polynomial of a certain degree for a given independent variable, the Stepwise Polynomial Regression function determines a fitting curve for this variable. The regression polynomials determined along these lines are combined to form the overall prediction model for the independent variable.

Assuming a maximum degree M for the potential regression polynomials the Stepwise Polynomial Regression method may be expressed with the following formula:

$$y = A + \Sigma_{i=1}^{n} f(Xi) + Error \qquad\qquad (eq.\ 3)$$

$$where\ f(X_i) = \begin{cases} & B_{i1} * X_i^1 \\ select\ one\ of & B_{i1} * X_i^1 + B_{i2} * X_i^2 \\ & \dots \\ & B_{i1} * X_i^1 + B_{i2} * X_i^2 + \dots + B_{iM} * X_i^M \end{cases}$$

and where y is the dependent variable, $X_i$ are the independent variables, A and $B_i$ denote the unknown coefficients.

Stepwise Polynomial Regression determines the specific regression polynomial, i.e. the fitting curve (eq. 3), in such a manner, that for each independent variable from all potential regression polynomials up to a maximum degree M a specific regression polynomial is selected. A selection process is suggested which determines for each of the potential regression polynomials a significance value measuring its appropriateness to reflect the functional relationship with the dependent variable, i.e. showing the "closest" relationship with the dependent variable. The most significant potential regression polynomial according to this significance measure is selected and added to the prediction model.

Fig. 7 visualizes a summarizing overview on the proposed Stepwise Polynomial Regression methodology by a flow diagram.

Stepwise Polynomial Regression starts by setting the maximum polynomial degree (701) M. This step limits the set of regression polynomials from which the method selects the most significant one.

Within an initialization step (702) a current prediction model is initialized. In most cases the method starts with an empty prediction model, which means that none of the independent variables is represented by a regression polynomial in its functional relationship with the independent variable. Of course the method offers the flexibility to start with a certain initial prediction model. In this case the initial prediction model can either comprise fitting functions for independent variables which are or which are not candidate variables for further improvement by the current invention.

The steps (703) to (706) represent a looping sequence which can be repeated until a certain termination criterion is fulfilled. Within step (703) the method determines, if all independent candidate variables have been reflected already in the current version of the prediction model. This can be achieved by just counting the number of already reflected variables. Within step (704) for every independent variable not yet reflected in the prediction model a multitude of regression polynomials with different polynomial degrees are determined based on the set of training data. In the most far-reaching embodiment of the invention for every not reflected independent variable **all** regression polynomials according to eq. 3 of **all degrees up to the maximum degree M** are determined. Next, for each of said candidate polynomials their significance value is determined. The significance measures, based on the set of training data, the degree of improvement of the current prediction model, if a regression polynomial "would" be added to the prediction model. The **significance** is thus a measure of the appropriateness of a regression polynomial to reflect the functional relationship with the dependent variable, i.e. showing the "closest" relationship with the dependent variable. Within step (705) the most significant potential regression polynomial according to this significance measure and its corresponding independent variable is then selected and added to the current prediction model thus reflecting that independent variable within the prediction model. The significance value is associated with the regression polynomial as well as with the independent variable of this most significant regression polynomial.

Within step (706) the method checks the fulfillment of a **termination criterion**. According to a basic implementation of the invention the termination criterion is a test whether all independent variables have been included in the prediction model by contributing a regression polynomial. The final prediction model at the point in time when the method terminated represents the prediction model as determined by the invention.

It is important to recognize that the suggested methodology is able to remove the constraint that all regression polynomials of all independent variables must have a common polynomial degree m. Moreover the invention even allows to determine in terms of the significance for the individual independent variables the "most appropriate" regression polynomial modeling its functional dependency with the dependent variable. Thus, if the unknown functional relationship of a certain independent variable and the dependent variable is of polynomial degree K, the proposed method will detect, that a regression polynomial of degree m=K will be "most appropriate" and will add it to the prediction model (a sufficient support by the set of training data assumed) even if the methodology would allow for a degree up to M. The current invention will therefore avoid the deficiencies of the state of the art (as outlined above) of approximating a functional relationship with a regression polynomial which is too small or too large. The avoidance of this deficiency is of special importance in the area of OLAP technology for improved prediction of the dependent variable for values of the independent variable not in the immediate neighborhood of training data.

### 4.4.1 The Significance Measure

A most advantageous implementation of a significance measure according to the current invention is based on the following features.

As a first observation the significance measure of a regression polynomial for an independent variable is reduced to the simpler problem of a significance measure of the individual powers of a regression polynomial.

According to a preferred implementation the significance of a polynomial is >= the minimum significance of all it's linear predictors:

$$B_1 X, B_2 X^2, ... B_m X^m \qquad \text{(eq. 4)}$$

Thus the significance of a regression polynomial is determined by the smallest significance of any of its powers.

Starting from this definition a significance measure for the linear predictors is required. For the linear predictors the invention suggests to exploit the F-test to test whether a predictor influences the dependent variables or not. The F-test is a statistical test, well-known in the state of the art, that checks whether two estimates of the variance of two independent samples are the same. In addition, the F-test checks whether the so-called NULL hypothesis is true or false. In application to the current situation assuming the inverse hypothesis, that "a predictor has no influence on the dependent variable", this leads to the following NULL hypothesis for the F-test: "a coefficient $B_i$ in a **linear** regression model (with respect to the various $Bj$) is zero".

For a single linear predictor the test statistic is

$F=(B_i^2)/(S_{X_iY}^2 * S_{X_i}^2)=t^2$ with a degree of freedom of (n-2) where $S_{X_iY}$ is the empirical **covariance** between $X_i$ (an independent variable) and $Y$ (the dependent variable) and $S_{X_i}$ is the empirical **variance** of $X_i$. In this special case the T-statistic $t$ is equal to the root of the F-statistic. This remark indicates that also other statistical measures (like the T-Test) could be used as foundation for the significance measure approach of the current invention.

From the perspective of a practical computation the F-Test value of a certain regression polynomial the F-Test value is determined on the basis of tentatively adding the regression polynomial to the current prediction model and on the basis on the training data set.

Based on this calculated F-test value the probability of obtaining a larger F-test value (Probability > F) can be determined according to the state of the art theory of the F-test. If this probability tends to zero there is a statistical evidence for rejecting the NULL hypothesis. Or in other words: the more the F-test value approaches the value of 1, the larger is the support that the NULL hypothesis is true, indicating a small significance of the corresponding linear predictor (power of the regression polynomial); vice versa: the more the F-test value approaches the value of 0, the larger is the support that the NULL hypothesis is false, indicating a large significance of the corresponding linear predictor.

Thus the invention proposes as significance measure of a linear predictor to use the (Probability > F) value based on the F-test theory.

### 4.4.2 Stepwise Polynomial Regression Conditionally Adding Independent Variables

Stepwise Polynomial Regression allows for several optimization strategies of the methodology depending on the particular objective. The proposed improvements are targeted at reducing the number of the independent variables which contribute to the prediction model. Stated in other terms, the improvements of the method will reflect not all of the possible independent variables within the prediction model and will limit the number of independent variables to those, which contribute to a "larger degree" to the functional relationship with the independent variable.

A first improvement of Stepwise Polynomial Regression will add independent variables to the set of variables reflected in the prediction model conditionally only. This first improvement is exploiting the so-called **adjusted R square** measure also called **adjusted correlation coefficient**. The adjusted R square measure is well known within the state of the art.

This first improvement results in an enhanced step (705) of Fig. 7. Instead of unconditionally adding the most significant regression polynomial to the prediction model, it is first determined, if its inclusion would improve the adjusted correlation coefficient of the resulting prediction-model with respect to the set of training data. Only in the affirmative case that regression polynomial and the corresponding independent variable is added to the prediction model. Otherwise the corresponding independent variable is excluded from said method without further participation in the iteration process.

More particularly, if step (704) indicates the most significant regression polynomial and its corresponding independent variable and if this variable is the k-th variable to be added to the prediction model, the selection criteria for actual adding this independent variable to the prediction model is:

$$R_k^{'2} > R_{k-1}^{'2} \qquad \text{(eq. 5)}$$

where the adjusted R square coefficient $R'$ for linear predictors is:

$$R_p^{'2} = 1-(q-1)/(q-p-1)*(1-R^2) \qquad \text{(eq. 6)}$$

where $R^2$ is the squared correlation coefficient with respect to the fitted and observed values, q is the number of observations (i.e. the number of training records), p is the number of independent predictors comprised by the regression polynomials within the current prediction model. In other words, the number of independent predictors p is equal to the number of the unknown coefficients $B_i$.

The correlation coefficient R is calculated by dividing the covariance from the observed (i.e. according to the training data) and the predicted values with the variance from the observed values and the variance from the predicted values. Therefore

$$R = S_{yy'}/(S_y S_{y'}) \qquad \text{(eq.7)}$$

where $S_{yy'}$ is the empirical covariance of Y and Y' which is determined by

$$S_{yyi} = (\sum_{i=0}^{q}(Y_i - Y_{Mean})(Y'_i - Y'_{Mean}))/(q-1)$$

and where $Y_i$ are the observed values of the dependent variables and $Y'_j$ are the predicted values.

As a result the Stepwise Polynomial Regression with adjusted R square optimization eliminates all independent variables which do not improve the adjusted correlation coefficient, i.e. which do not improve the prediction model. As an important computational advantage this results in a prediction model requiring a smaller number of independent variables. Only those independent variables will become part of the prediction model which improve the prediction quality.

### 4.4.3 Stepwise Polynomial Regression Conditionally Adding and Removing Independent Variables

A second improvement of Stepwise Polynomial Regression will likewise add independent variables conditionally only to the set of variables reflected in the prediction model. Moreover it also will remove independent variables from the prediction model again in case of certain conditions. Thus the second improvement is targeted to determine a prediction model with as few independent variables as possible.

This second improvement results in an enhanced step (705) of Fig. 7. Instead of unconditionally adding the most significant regression polynomial to the prediction model it is first determined, if the significance of the currently most significant regression polynomial is above a predefined threshold significance value. In the affirmative case only said currently most significant polynomial is added to the prediction model. Additionally this second improvement of the invention enhances the looping sequence reflected in Fig. 7 by a third step succeeding step (705). Within this new step it is determined, if the significance of a certain regression polynomial (or a multitude of regression polynomials) comprised within the current prediction model is reduced after the last regression polynomial has been added to the prediction model. If this is the case, said certain regression polynomial together with its corresponding independent data mining variable is removed from the current prediction model. Though this independent variable is no longer reflected in the prediction model, it may of course participate within the further iteration process; i.e. a removed variable can be added again in one of the next steps of the iteration. Another alternative handling is to exclude an independent variable, which once has been removed from the prediction model, from said method without further participation in the iteration process.

These steps (adding, removing of variables) are repeated until all variables whose significance is higher than the specified threshold significance value are added to the model. This algorithm is called stepwise regression with full forward (adding variables) and backward (removing variables) capabilities. Expressing the termination criterion in other words, the looping sequence is terminated if the significance of the currently most significant regression polynomial is below said threshold significance.

With respect to the comparison of significance values it has to be stressed that the significance of variable is higher if it's (Probability > F) value tends to zero. That means, a variable is added when the it's (Probability > F) value is lower than the given significance threshold.

As the result of this second improvement the suggested methodology provides the possibility to find a prediction model in terms of minimizing the number of required independent variables.

### 4.5 Determination of the Most Significant Variable Types by Regression Functions in Case of Multiple Measure Types

After having discussed the details of calculating a regression function the focus of the discussion turns back to Fig. 5 describing further steps of the overall method of determining variable dimensions of a multidimensional database table.

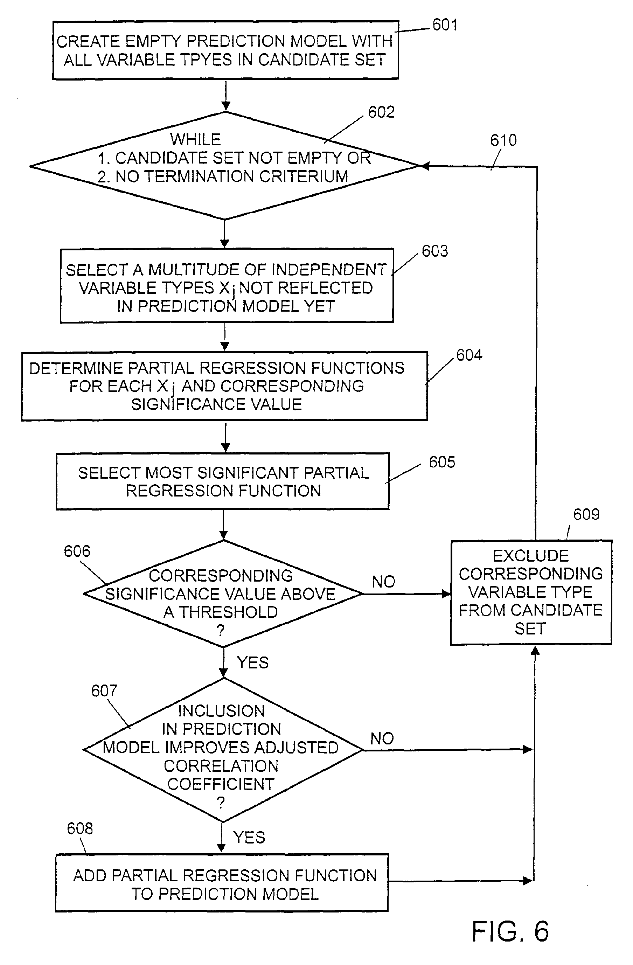

In the following discussion it is assumed that a multitude of L different measure types is available. With respect to this situation the current invention proposes a techniques allowing to determine "up to" the $M$ most significant dimensions for a set of $L$ measures ($M$ may be a predefined number). It has to be stressed at this point that the prediction model for a certain measure type may even comprise less than M variable types. This is due to the self optimizing capability of the current technology as outlined together with the description of Fig. 7 above or the further description given below together with Fig. 6: the current technology is capable of excluding certain variable types from being reflected within the prediction model if the inclusion of a variable type does not improve the prediction quality (measured by the adjusted correlation coefficient).

To solve this multidimensional problem, a two phase approach is proposed.

In the first phase up to the $M$ most significant variable dimensions are determined for each measure. This is done by using the single measure approach as described above. As a result for each measure type up to the $M$ most significant variable types as candidates for the variable dimensions and their corresponding significance value $S$ is determined. For a variable type which is not part of the prediction model for a certain measure type the significance value is set to zero.

Above procedure will be performed for each measure type.

As result of the first phase $L$ significance values for each of the $N$ available dimensions are determined.

For the second phase the current invention proposes three alternative approaches to determine an overall significance value, called the **effective significance** $S_k^{eff}$, for each individual variable type $X_k$. The effective significance value is determined by a **balancing function B** depending on all significance values of said variable types:

$$S_k^{eff}=B(S_k(Measure_1),S_k(Measure_2),...,S_k(Measure_L)) \qquad \text{(eq. 9)}$$

A. Approach A focuses on the overall contribution of a single variable type to all measures types; therefore the effective significance of a single variable type is defined as average significance of the individual significances with respect to the $L$ measures

$$S_k^{eff}=(\Sigma_{i=1}^{L} S_k(Measure_i))/L \qquad \text{(eq. 10)}$$

This approach tends to find the best overall dimensions for all measures.

B. Approach B focuses on a combination of the "best" variable types for each individual measure; this results in an effective significance of:

$$S_k^{eff}=Max(S_k(Measure_1),S_k(Measure_2),....,S_k(Measure_L)) \qquad \text{(eq. 11)}$$

This approach tends to find the "best" combination of dimensions to describe the individual aspects of the measures. To avoid weighting conflicts between the multiple measures the invention proposes to use a "standardized" significance Measures $S_k^l(Measure_i)$ which is defined as

$$S_k^l(Measure_i)=S_k(Measure_i)/Max(S_1(Measure_i),.....,S_N(Measure_i)) \qquad \text{(eq.12)}$$

with a "standardized" effective significance:

$$S{'}_k^{eff}=Max(S_k^l(Measure_1),S_k^l(Measure_2),....,S_k^l(Measure_L)) \qquad \text{(eq. 13)}$$

C. Approach C focuses on a kind of "worst case" approach by determining the effective significance value as the lowest value of said all significance-values:

$$S_k^{eff} = Min(S_k(Measure_1),\ S_k(Measure_2),....,\ S_k(Measure_L)) \qquad \text{(eq. (14)}$$

With the standardization of eq. 12 the standardized effective significance results as:

$$S{'}_k^{eff}=Min(S{'}_k(Measure_1),S{'}_k(Measure_2),....,S{'}_k(Measure_L)) \qquad \text{(eq. 15)}$$

The activities of these two phases of determining for each potential variable type a significance value for each measure type and using a balancing function, which depends on the individual significance values, finally allows to calculate an effective significance value for each variable type. This process is depicted as step 505 within Fig. 5.

The final step, visualized in Fig. 5 as step 506 and representing a third phase, selects the $M$ most significant dimensions from the available $N$ dimensions

$$Z_1,Z_2,...Z_M \text{ with } \{Z_k=X_j; k \in [1,2,..M]; j \in [1,2..N]\} \qquad \text{(eq. 16)}$$

The number of selected dimensions may even be smaller than $M$ if the rest of the possible variables types are associated with an effective significance value of 0.

Referring back to the description above it is remembered that the variable dimensions of a multidimensional database table are populated by a multitude of members. These members are further categorized in a multitude of hierarchical member levels. The variable types determined according to the current invention as variable dimensions of the multidimensional database table are representing the members in said variable dimensions on the lowest hierarchical member level. The higher hierarchical member levels within each variable dimension are then created based on the lowest hierarchical member levels and the multitude of input records through an aggregation and consolidation process.

### 4.6 Extension by Using General Regression Functions Instead of Regression Polynomials

For an explanation of a further embodiment of the current invention relating to the specific technology of calculating a regression function the focus of the discussion is put temporarily on Fig. 6. Fig. 6 is a flow chart depicting in more details how according to a preferred embodiment of the invention a regression function is calculated by an iteration process calculating partial regression functions for the individual variable types.

The method starts with an initialization-step 601 initializing a current prediction model. At the very beginning of the method the prediction model is empty. Furthermore a candidate set of variable types is established for inclusion within the regression function. At the beginning of the method this candidate set comprises all available variable types.

Next, the looping sequence 602 up to 609 will be described.

In step 602 a test is being made whether the candidate set still comprises a variable type not yet reflected within the regression function. In addition it is analyzed whether any of the termination criteria (to be discussed below) are fulfilled which would trigger that the method ends.

The looping sequence comprising a step 603 of determining for every variable type not yet reflected in the current prediction model a multitude of partial regression functions 604 each **partial regression function** depending only on one of the variable types. In addition for each of the partial regression functions a significance value S is determined.

Within this step 605 the most significant partial regression function and the corresponding not yet reflected variable type is selected. But instead of unconditionally adding the most significant partial regression function, it is the first determined within step 607, if its inclusion improved the **adjusted correlation coefficient R'** of the resulting regression function. If the adjusted correlation coefficient R' is not improved, the corresponding variable type is removed from the candidate set in step 609 and the method will be iterated along path 610.

Thus the selection criteria for actual adding the k-th additional variable type to the regression function is:

$$R_k^{'2} > R_{k-1}^{'2} \text{ and } k <= M_i \tag{eq.17}$$

where $M_i$ is a predefined upper limit of the number of variables to be to be reflected exploiting the i-th measure and where the adjusted R square coefficient $R'$ is:

$$R_p^{'2} = 1 - (q-1)/(q-p-1)*(1-R^2) \tag{eq. 18}$$

$R^2$ is the squared correlation coefficient with respect to the fitted and observed values of the $Measure_i$, q is the number of observations (i.e. the number of training records), p is the number of dimensions comprised by the regression function within the current regression model. It is pointed out that eq. 17 establishes in addition to the methodology as described in context with Fig. 7 a further constraint, functioning as a termination criterion: the number of variables making up the prediction model may not exceed an upper limit $M_i$. This feature of the invention allows to limit the number of OLAP cube dimensions very effectively. It can be combined with all other features of the current invention. For practical exploitations of the current invention especially this additional criterion has been proven to be very important.

The correlation coefficient R is calculated by dividing the covariance from the observed (i.e. according to the training data, i.e. multitude of input records) and the predicted values with the variance from the observed values and the variance from the predicted values.

Therefore

$$R = S_{Measure_i \, Measure'_i} / (S_{Measure_i} \, S_{Measure'_i}) \tag{eq. 19}$$

where $S_{Measure_iMeasure'_i}$ is the empirical covariance of $Measure_i$ and $Measure'_i$ which is determined by

$$S_{Measure_iMeasure'_i} = (\Sigma_{i=0}^{q}(Measure_i - Measure_{Mean})(Measure'_i - Measure'_{Mean}))/(q-1)$$

$$\tag{eq. 20}$$

and where $Measure_i$ are the observed values of the measure type and $Measure'_i$ are the predicted values of the measure type. Furthermore $S_{Measure_i}$ and $S_{Measure'_i}$ are the well-known variances.

It is most important to realize that proposed model optimization returns "up to the $M_i$" most significant variable types for the given measure. Thus the suggested methodology is able find any set of optimum (most significant) dimensions within

$$1 \text{ and } M_i \tag{eq. 21}$$

Other state of the art optimization criteria will only be able to find a optimum set with a predefined maximum number $M_i$ of variable types. This behavior is the result of the combination of the steps 606, 607, 609.

Further remark is to be made with respect to the influence of the additional constraint of limiting the number of variables making up the prediction model to not exceed an upper limit comprised within eq. 17.

In the following example a regression function according to the current invention is calculated based on the same set of input records in a first course without the additional termination criterion $k<=M_i$ and in the second course with the additional termination criterion of eq. 17. The input records comprised the following 12 variable types: age_of_car, amount_of_claims, car_location, car_type, commute_distance, domicile, gender, material_status, no_of_claims, no_of_dependents, profession_category, salary .

Without the additional criterion 8 variable types have been identified with the following significance values:

| Dimension | Significance |
| --- | --- |
| salary | 0,99999958 |
| no_of_claims | 0,99994183 |
| commute_distance | 0,99348850 |
| gender | 0,95557000 |
| material_status | 0,95346000 |
| age_of_car | 0,88420000 |
| car_location | 0,83151000 |
| amount_of_claims | 0,63130000 |

The other variable types car_type, domicile, no_of_dependents and profession_category are dismissed automatically by the method.

Exploiting the additional criterion and limiting the number of variable types it to 7 the following significance values result:

| Dimension | Significance |
| --- | --- |
| salary | 0,99999988 |
| no_of_claims | 0,99345700 |
| commute_distance | 0,99326300 |
| gender | 0,96173000 |
| material_status | 0,95478000 |
| age_of_car | 0,89051400 |
| car_location | 0,83201200 |

As can be seen from the comparison of the two results the significance order of the variable types are the same, but the significance values differ. Assuming multiple measures this difference in the precision of the significance values can decide whether a dimension is part of the proposed OLAP cube or not if the teaching of chapter 4.5 is exploited.

Within an optional step 606, which may be executed before or after step 607, it may be checked whether the determined significance value is above a predefined threshold value. Only if this is the case, the method will proceed with step 608; otherwise the already discussed step 609 will be executed and the method iterates along the path 610.

Finally, if all these tests have been successful, the calculated partial regression function is added to the prediction model. The method then iterates via step 609 and path 610 calculating further partial regression functions and corresponding variable types.

In an further optional embodiment of the determination process of a regression function step 608 maybe succeeded by a further step of determining whether the significance of a certain partial regression-function, which is already part of the current prediction model, is reduced after execution of step 608. In the affirmative case, that partial regression function and its corresponding variable type would be removed again from the current prediction model.

Several termination criteria may be imposed on a the iteration procedure. For instance the looping sequence will be terminated if all variable types are reflected in the current prediction model. Also, the looping sequence may be terminated if the significance of the most significant partial regression function of the current iteration step is below a second threshold significance.

## Claims

1. A computerized method for automatically determining one or more variable-dimensions for a multi-dimensional database-table,

said multi-dimensional database-table also comprising at least one pre-defined measure-dimension for storing values of one or more measure-types, and

said method utilizing a set of input-records, each of said input-record comprising a value for at least a first measure-type and associated values of a multitude of variable-types, said variable-types representing candidates for said variable-dimension, and

said method calculating (502) a regression-function as prediction-model of said values of said measure-type, said regression-function depending on values of a sub-set of up to M most significant of said variable-types, and

said method determining (506) said most significant variable-types as variable-dimensions of said multi-dimensional database-table.

2. A computerized method according to claim 1,

wherein said method further determining members of said variable-dimension,

wherein said values of said most significant of said variable-types are selected as members of said corresponding variable-dimension on a lowest hierarchical member-level, and

wherein hierarchical aggregations of said members are aggregated as further members of said variable-dimension on higher hierarchical member-levels.

3. A computerized method according to claim 1,

said method calculating for each of said up to M variable-types a significance-value, and, optionally,

said method associating each variable-type not contributing to said regression-function with a significance-value of 0.

4. A computerized method according to claim 3,

wherein in a first phase (503) said method is repeated for a set of L measure-types,

whereby calculating L regression-functions, and

whereby calculating significance-values for each variable-type of each of said L regression-functions, and

wherein in a second phase (505) for each variable-type an effective significance-value is determined by a balancing-function depending on all significance-values of said each variable-type.

5. A computerized method according to claim 4,

wherein said balancing-function is determining said effective significance-value of said variable-types as mean value of said all significance-values, or

wherein said balancing-function is determining said effective significance-value as the largest value of said all significance-values, or

wherein said balancing-function is determining said effective significance-value as the lowest value of said all significance-values.

6. A computerized method according to claim 5,
wherein in a third phase (506), the up to M most significant variable-types according to said effective significance-value are selected as variable-dimensions of said multi-dimensional database-table, wherein M is a predefined number.

7. A computerized method according to claim 3,

wherein calculating said prediction-model for said measure-type comprises the following steps:

an initialization-step (601) initializing a current prediction-model; and
a looping-sequence (603 - 608),
said looping-sequence comprising a first-step (604) of determining for every variable-type not yet reflected in said current prediction-model a multitude of partial regression-functions each partial regression-function depending only on one of said variable-types; and

determining for each of said partial regression-functions a significance-value; and
selecting (605) the most significant partial regression-function and the corresponding not yet reflected variable-type; and

said looping-sequence comprising a second-step (608) of adding said most significant partial regression-function to said current prediction-model and of associating said corresponding variable-type with said significance-value.

8. Method according to claim 7,

wherein in said second-step said most significant partial regression-function is added only if its inclusion improves the adjusted-correlation-coefficient of the prediction-model (607) and if its inclusion does not exceed the upper limit M of the number of variable-types reflected in said current prediction-model; and
otherwise excluding (609) the variable-type corresponding to said most significant partial regression-function from said method.

9. Method according to claim 8,

wherein in said second-step said most significant partial regression-function is added if its significance is above a threshold-significance (606); and
wherein said looping-sequence is comprising a third-step of determining if the significance of a certain partial regression-function comprised within said current prediction-model is reduced after execution of said second-step; and,
in the affirmative case, removing said certain partial regression-function with its corresponding variable-type from said current prediction-model.

10. Method according to claim 9,
wherein said looping-sequence is terminated if all variable-types are reflected in said current prediction-model.

11. Method according to claim 9,
wherein said looping-sequence is terminated if the significance of said most significant partial regression-function is below a second threshold-significance.

12. Method according to claim 7,
wherein in said initialization-step a said initialized current prediction-model is empty.

13. A computerized method according to claim 7,
wherein said partial regression-functions are regression-polynomials.

14. Method according to claim 13,

wherein said significance being determined by calculating the significance of all powers of a regression-polynomial; and

using the minimum significance of said powers as significance-measure of said regression-polynomial.

15. Method according to claim 14,

calculating said significance of said powers based on the F-test values for the coefficients of said powers.

**16.** A computer system comprising means adapted for carrying out the steps of the method according to anyone of the preceding claims 1 to 15.

**17.** A data processing program for execution in a data processing system comprising software code portions for performing a method according to anyone of the preceding claims 1 to 15 when said program is run on said computer.

**18.** A computer program product stored on a computer usable medium, comprising computer readable program means for causing a computer to perform a method according to anyone of the preceding claims 1 to 15 when said program is run on said computer.

FIG. 1

Multidimensional Database ——— 200

```
├─ Time ——— 202
│    └─ 1997 ——— 204
│         ├─── Q1 ——— 206
│         ├─── Q2 ——— 208
│         ├─── Q3 ——— 210
│         └─── Q4 ——— 212
│
├─ Product ——— 214
│    ├─── A ——— 216
│    ├─── B ——— 218
│    └─── C ——— 220
│
└─ Measures ——— 222
     ├─── Sales ——— 224
     ├─── Costs ——— 226
     └─── Profits ——— 228
```

FIG. 2

FIG. 3

TIME /414

Multi-
Dimensional Relational

| Member Name | Member Identifier | Member Identifier |
|---|---|---|
| Time | 1 | 10 |
| 1997 | 2 | 20 |
| Q1 | 3 | 30 |
| Q2 | 4 | 40 |
| Q3 | 5 | 50 |
| Q4 | 6 | 60 |

400

416 PRODUCT

Multi-
Dimensional Relational

| Member Name | Member Identifier | Member Identifier |
|---|---|---|
| Products | 7 | 70 |
| A | 8 | 80 |
| B | 9 | 90 |
| C | 10 | 100 |

402

FACT TABLE

404 406 408 410 412

| Time | Product | Sales | Costs | Profits |
|---|---|---|---|---|
| 10 | 70 | 3500 | 2500 | 1000 |
| 20 | 80 | 1650 | 1200 | 450 |
| | | | | |
| | | | | |
| | | | | |
| | | | | |
| | | | | |

418

MEASURES

Multi-
Dimensional Relational Relational

| Member Name | Member Identifier | Member Identifier | Member Identifier |
|---|---|---|---|
| Sales | 11 | 110 | Sales |
| Costs | 12 | 120 | Costs |
| Profits | 13 | 130 | Profits |

FIG. 4

501 SELECT MEASURE-TYPE MEASURE $_i$
OF MULTIDIMENSIONAL DATABASE-TABLE

504

502 BASED ON INPUT RECORDS WITH VALUES
FOR CANDIDATE VARIABLE-TYPES $X_k$
AND MEASURE-TYPES

- CALCULATE REGRESSION-FUNCTION
  AS PREDICTION-MODEL OF SELECTED
  MEASURE-TYPE

- BASED ON UP TO $M_i$ MOST SIGNIFICANT
  VARIABLE-TYPES

503 FURTHER
MEASURE-TYPES
MEASURE $_j$
?

YES

NO

505 FOR EACH POTENTIAL VARIABLE-TYPE $X_k$
DETERMINE AN EFFECTIVE SIGNIFICANCE
$S_k^{eff}$ USING A BALANCING FUNCTION B
DEPENDING ON INDIVIDUAL SIGNIFICANCE-
VALUES

$$S_k^{eff} = B (S_k(\text{Measure}_1) S_k (\text{Measure}_2), \dots )$$

506 WITH RESPECT TO EFFECTIVE SIGNIFICANCE
$S_k^{eff}$ SELECT THE $M\_eff$ MOST SIGNIFICANT
VARIABLE-TYPES AS VARIABLE-DIMENSIONS
FOR MUTLIDIMENSIONAL DATABASE-TABLE

FIG. 5

CREATE EMPTY PREDICTION MODEL WITH ALL VARIABLE TPYES IN CANDIDATE SET — 601

WHILE
1. CANDIDATE SET NOT EMPTY OR
2. NO TERMINATION CRITERIUM — 602

610

SELECT A MULTITUDE OF INDEPENDENT VARIABLE TYPES $X_j$ NOT REFLECTED IN PREDICTION MODEL YET — 603

DETERMINE PARTIAL REGRESSION FUNCTIONS FOR EACH $X_j$ AND CORRESPONDING SIGNIFICANCE VALUE — 604

SELECT MOST SIGNIFICANT PARTIAL REGRESSION FUNCTION — 605

606 — CORRESPONDING SIGNIFICANCE VALUE ABOVE A THRESHOLD ? — NO

609 — EXCLUDE CORRESPONDING VARIABLE TYPE FROM CANDIDATE SET

YES

607 — INCLUSION IN PREDICTION MODEL IMPROVES ADJUSTED CORRELATION COEFFICIENT ? — NO

YES

608 — ADD PARTIAL REGRESSION FUNCTION TO PREDICTION MODEL

FIG. 6

FIG. 7